(19) Europäisches Patentamt
European Patent Office
Office européen des brevets

(11) **EP 2 135 220 B1**

(12) **FASCICULE DE BREVET EUROPEEN**

(45) Date de publication et mention
de la délivrance du brevet:
**14.07.2010 Bulletin 2010/28**

(21) Numéro de dépôt: **08735582.2**

(22) Date de dépôt: **28.03.2008**

(51) Int Cl.:
**G06T 5/00** *(2006.01)*   **G06T 5/50** *(2006.01)*

(86) Numéro de dépôt international:
**PCT/EP2008/053760**

(87) Numéro de publication internationale:
**WO 2008/125462 (23.10.2008 Gazette 2008/43)**

(54) **PROCEDE DE CORRECTION DE BRUIT SPATIAL DE CAPTEUR D'IMAGE PAR BORNAGE DES LUMINANCES**

VERFAHREN ZUR KORREKTUR DES RÄUMLICHEN RAUSCHENS EINES BILDSENSORS MITTELS LUMINANZBEGRENZUNG

METHOD FOR CORRECTING THE SPATIAL NOISE OF AN IMAGE SENSOR BY LUMINANCE LIMITATION

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **30.03.2007 FR 0702349**

(43) Date de publication de la demande:
**23.12.2009 Bulletin 2009/52**

(73) Titulaire: **Commissariat à l'Énergie Atomique et aux Énergies Alternatives
75015 Paris (FR)**

(72) Inventeur: **CHAMMING'S, Gilles
F-38100 Grenoble (FR)**

(74) Mandataire: **Guérin, Michel
Marks & Clerk France
Conseils en Propriété Industrielle
Immeuble " Visium "
22, avenue Aristide Briand
94117 Arcueil Cedex (FR)**

(56) Documents cités:
**EP-A- 0 751 483        US-A- 6 151 417
US-A1- 2007 047 834**

**Description**

L'invention concerne les capteurs d'image matriciels, et elle concerne plus particulièrement une méthode pour corriger le bruit spatial engendré par la dispersion des propriétés physiques des différents points sensibles élémentaires, ou pixels, de la matrice. Ce bruit spatial est particulièrement important dans le cas de capteurs d'image infrarouges, que ce soient des capteurs à éléments photovoltaïques, qui mesurent des courants engendrés par le rayonnement infrarouge, ou des capteurs à éléments bolométriques, qui mesurent une température résultant d'un échauffement produit par le rayonnement.

Le bruit spatial engendre une image parasite qui détériore l'image utile ou même la rend inexploitable : en supposant que la scène observée par le capteur est une image de luminance uniformément moyenne, le capteur fournit une image non-uniforme, ce qui est inacceptable si cette non-uniformité excède un certain degré ; de plus, l'image observée dépend du niveau de cette luminance uniforme, ce qui rend ce bruit encore plus gênant puisque la différence de comportement de deux pixels dépend de la luminance qu'ils reçoivent.

Le comportement des pixels diffère en effet d'un pixel à l'autre non seulement en ce qui concerne le niveau de signal produit pour un niveau de luminance de référence, mais aussi en ce qui concerne la pente de croissance et l'allure générale (pour simplifier : la courbure) de la courbe de réponse du pixel en fonction de la luminance.

Pour réduire au minimum le bruit spatial ainsi engendré dans un capteur matriciel, on a déjà proposé de relever les niveaux de signaux de sortie des différents pixels pour une image uniforme de luminance donnée et de décaler individuellement le niveau de signal de chaque pixel pour que tous les pixels soient ramenés à une même référence (correction au premier ordre). On a également proposé de relever les niveaux pour deux niveaux de luminance uniforme, afin de corriger non seulement le décalage de niveau mais aussi la pente de variation (correction au deuxième ordre).

Ces méthodes nécessitent un calibrage manuel à partir d'une ou deux images uniformes présentant des luminances de référence, ce qui est gênant ; par ailleurs, ce calibrage doit être refait si le bruit spatial dérive au cours du temps.

US 2007 047 834 divulgue la correction de bruit pour chaque pixel par modification des luminances selon une moyenne glissante à partir d'une séquence d'images et à l'aide des filtres de Kalman dans des régions sans mouvement d'objet.

Enfin, il a été proposé d'effectuer des calculs correctifs de chacun des points de l'image recueillie, à partir de l'observation d'un grand nombre d'images successives, en faisant l'hypothèse que la moyenne statistique et la variance statistique des niveaux de lumière reçus par un pixel est la même pour tous les pixels en raison de la diversité des images reçues au cours du temps. Ainsi, on calcule la moyenne des signaux reçus dans le temps pour chaque pixel et on effectue une correction du signal courant du pixel pour décaler le niveau courant d'une valeur correspondant à l'écart entre la moyenne détectée pour ce pixel et une valeur de référence de moyenne commune à tous les pixels. Ceci ramène le niveau moyen de tous les signaux à la même valeur de référence.

De même on calcule la variance pour chaque pixel sur un grand nombre d'images, cette variance représentant en quelque sorte une approximation de la pente de la courbe de variation du niveau de signal en fonction de la luminance, et on applique une correction de gain aux variations de signal courant, la correction étant l'écart entre la variance calculée et une variance de référence commune à tous les pixels. Ceci ramène la pente de variation de chaque pixel à une même valeur de référence.

Cette solution est très intéressante puisqu'elle ne nécessite aucun calibrage à partir de mires.

Mais ces calculs sont très lourds puisqu'ils nécessitent de recueillir un grand nombre d'images, de les stocker toutes, de faire des calculs de moyenne pour chaque pixel sur ce grand nombre d'images, ainsi que des calculs de variance sur chaque pixel. En pratique, cela ne peut être effectué que par un calculateur puissant, sur des séries d'images préenregistrées. On ne pourrait pas recueillir et traiter directement l'image dans la caméra de prise de vue. Par conséquent, bien que cette solution soit utilisable en théorie pour le traitement d'images en différé, elle n'est pas du tout applicable pour une prise d'image instantanée.

L'invention propose une solution pour pallier cette difficulté.

Selon l'invention, on propose un procédé de calibrage automatique de la réponse des différents pixels d'un capteur matriciel pour éliminer le bruit spatial dû à la réponse non uniforme des différents pixels. Le procédé selon l'invention est un procédé de traitement de signaux issus des pixels d'un capteur d'image matriciel, comprenant les étapes suivantes :

- on recueille le signal issu de chaque pixel au cours d'un grand nombre d'images successives ;
- on détermine pour chaque pixel une valeur approchée d'une moyenne du signal issu du pixel au cours de ce grand nombre d'images ;
- on corrige instantanément le signal issu de chaque pixel en fonction de la valeur moyenne approchée déterminée et d'une valeur moyenne de référence commune à tous les pixels,
 caractérisé en ce que la moyenne approchée est obtenue en déterminant des valeurs limites haute et basse prises par le signal issu du pixel au cours du grand nombre d'images, et en calculant une valeur centrale entre ces valeurs limites hautes et basses.

La correction au premier degré consiste à ajouter au signal la différence entre la moyenne approchée et la moyenne de référence. On peut prendre comme valeur moyenne approchée la demi-somme des valeurs limite haute et basse.

De préférence, le calcul de la moyenne approchée et la correction du signal sont effectués, pour chaque pixel, dans un circuit électronique élémentaire associé au pixel, et on extrait d'une matrice de circuits associés les signaux corrigés correspondant à chaque pixel. Il y a donc une matrice de circuits associés, qui est soit confondue avec la matrice de photodétecteurs, le circuit associé étant intégré dans la matrice de photodétecteurs, soit juxtaposée à la matrice de photodétecteurs. La correction est de préférence une correction numérique.

Les valeurs limites haute et basse sont de préférence calculées numériquement par une méthode récursive. Par méthode numérique récursive, on entend une méthode de calcul d'une fonction $F_N(x_1, x_2, x_3, ... x_n.....x_N)$ de N variables $x_n$ de rang n variant de 1 à N, dans laquelle on part d'une valeur $F_n$ trouvée pour cette fonction en utilisant les n premières variables et on calcule la valeur $F_{n+1}$ pour n+1 variables par une fonction de $F_n$ et de la variable ajoutée $x_{n+1}$ :

$$F_{n+1} = R(F_n, x_{n+1}).$$

Une telle méthode aboutit progressivement au calcul de $F_N$ et n'est pas limitée par la valeur de N puisqu'elle peut continuer au fur et à mesure que N augmente.

La valeur limite haute utilisée dans le calcul de moyenne peut être obtenue tout simplement en comparant la valeur de signal non corrigé issu de chaque pixel avec le contenu d'un registre de valeur limite haute et en remplaçant le contenu du registre par la valeur du signal reçu si cette dernière est plus grande que le contenu du registre. Pour la valeur limite basse on agit symétriquement avec un registre de valeur limite basse qui reçoit la valeur du signal reçu si cette dernière est plus petite que le contenu du registre.

On peut également calculer une valeur limite haute d'une manière récursive plus sophistiquée, par l'algorithme suivant :

- si la valeur du signal du pixel pour l'image courante est supérieure à la valeur limite haute, on modifie la valeur limite haute pour lui ajouter une fraction de la différence entre la valeur du signal et la valeur limite ;
- si la valeur du signal du pixel est inférieure à la valeur limite, on retranche à cette valeur une fraction de la différence entre les valeur limites haute et basse.

On obtient une approximation de valeurs limites haute et basse qui a l'avantage d'éliminer des points aberrants et qui correspond donc mieux à une évaluation statistique de l'amplitude de variation du signal, commune à tous les pixels.

Pour la valeur limite basse, on agit symétriquement.

En plus des corrections additives qui viennent d'être mentionnées et qui consistent à additionner au signal la différence entre une valeur moyenne de référence et une valeur moyenne calculée, on peut aussi prévoir au niveau du pixel une correction multiplicative utilisant un coefficient multiplicateur qui modifie la pente de variation du signal en fonction de la luminance, le coefficient multiplicateur étant le rapport entre un écart de référence souhaité et l'écart constaté entre les valeurs limites haute et basse.

Outre le procédé de correction qui vient d'être résumé, l'invention concerne un capteur d'image matriciel, comprenant, pour chaque pixel, un circuit numérique élémentaire associé au pixel, ce circuit élémentaire comportant

- des moyens pour calculer une valeur approchée d'une moyenne du signal issu du pixel au cours d'un grand nombre d'images précédentes, la moyenne étant obtenue en déterminant les valeurs limites haute et basse prises par le signal issu du pixel au cours du grand nombre d'images et en calculant une valeur centrale entre ces valeurs limites hautes et basses,
- des moyens pour corriger le signal issu du pixel en fonction de la valeur moyenne approchée déterminée et en fonction d'une valeur moyenne de référence commune à tous les pixels,
- et des moyens pour transmettre hors du circuit associé au pixel un signal corrigé.

D'autres caractéristiques et avantages de l'invention apparaîtront à la lecture de la description détaillée qui suit et qui est faite en référence aux dessins annexés dans lesquels :

- la figure 1 représente un schéma de principe du circuit de correction utilisé dans l'invention pour une correction additive ;

- la figure 2 représente un complément de circuit dans le cas d'une correction additive et multiplicative.

L'invention part du postulat que la distribution temporelle statistique des luminances est bien la même pour tous les pixels de l'image. En particulier le niveau de luminance moyen qui aura été vu par les pixels de la matrice sera le même pour tous les pixels ; également, les niveaux de luminance extrêmes (minimum et maximum) ont de bonnes chances d'être les mêmes.

Si le postulat de départ sur lequel se fonde l'invention est vérifié on pourra corriger de manière extrêmement satisfaisante chacun des pixels en calculant leur moyenne et en corrigeant chaque signal par l'écart entre la moyenne trouvée et une valeur de référence commune à tous les pixels. Si ce postulat n'est qu'approximativement vérifié, par exemple parce qu'on n'a pas calculé la moyenne sur des nombres d'images suffisamment grands, on aura de toutes façons considérablement amélioré le bruit spatial sans faire appel à une calibration manuelle et sans utiliser de scènes de calibrage ayant des luminances de référence.

Le calcul de moyenne pixel par pixel pour un grand nombre d'images est très lourd. L'invention propose de faire au niveau de chaque pixel d'image un calcul simplifié et approché, qui n'est donc pas un véritable calcul de moyenne, mais qui fournit un résultat presque équivalent du point de vue du but recherché ; avec ce calcul approché, on effectue une correction au niveau du pixel de manière à extraire directement et instantanément un signal corrigé.

Le calcul et la correction au niveau du pixel peuvent se faire soit dans la matrice de détection elle-même si la technologie le permet (le circuit électronique de calcul associé à un pixel étant à proximité immédiate d'un élément photodétecteur du pixel) ou dans une matrice de circuits associés reliée pixel à pixel à une matrice d'éléments photodétecteurs. Dans ce deuxième cas, un circuit de calcul associé, de rang i,j dans la matrice de circuits, reçoit un signal à corriger d'un élément photodétecteur de rang i,j de la matrice de détection et il fournit vers l'extérieur du capteur un signal corrigé ; les techniques d'hybridage de circuits permettent cette association. Dans les deux cas, le signal issu du photodétecteur est corrigé avant la transmission vers l'extérieur, ligne par ligne, d'une série de signaux correspondant à une image complète.

Correction additive par la moyenne temporelle des signaux d'un pixel

On va d'abord expliciter l'invention dans un exemple simple où la correction de bruit spatial ne comporte qu'une correction de niveau de référence de signal, pour corriger le signal de chacun des pixels de telle sorte que tous les pixels fournissent un même niveau de signal (après correction) pour un niveau de luminance moyen. Il s'agit d'une correction additive : pour corriger le signal reçu par un pixel, on ajoute ou on retranche systématiquement une valeur de correction.

On appelle $S_{ij,n}$ le niveau de signal issu d'un pixel $P_{ij}$ de rang i en ligne et j en colonne, lors d'une n$^{ième}$ image d'une série d'images successives.

On calcule une moyenne (approchée) $M_{ij}$ des niveaux de signal fournis par le pixel $P_{ij}$ pour une série de N images et on s'en sert pour corriger la valeur du signal $S_{ij,n}$ et fournir à l'utilisateur une valeur corrigée $S^*_{ij,n}$.

A chaque nouvelle image on recalcule une moyenne $M_{ij}$, et c'est cette moyenne qui va servir à corriger le signal issu d'un pixel pour cette image ou pour la suivante.

La correction appliquée au signal $S_{ij,n}$ est une soustraction de l'écart entre la moyenne $M_{ij}$ et une valeur de référence M0 commune à tous les pixels. La correction est donc la suivante : $S^*_{ij,n} = S_{ij,n} + M0 - M_{ij}$.

Par conséquent, si un pixel fournit statistiquement un signal dont la valeur moyenne $M_{ij}$ n'est pas égale à la valeur moyenne statistique M0 des signaux fournis par tous les autres pixels, on considère que ce pixel a cependant reçu statistiquement la même luminance moyenne que tous les autres et c'est donc du fait d'une sensibilité différente qu'il fournit un signal différent. On le corrige systématiquement en lui soustrayant l'écart $M_{ij}-M0$.

Calcul de moyenne $M_{ij}$ par valeur médiane entre extrêmes

Il n'est pas facile de calculer une moyenne $M_{ij}$ sur un très grand nombre d'échantillons puisqu'il faut faire la somme de N échantillons et diviser cette somme par N ; à chaque nouvelle image il faut éliminer un échantillon le plus ancien et le remplacer par le nouvel échantillon (ce qui donne une moyenne glissante sur les derniers N échantillons reçus) ; ce calcul est d'autant plus lourd que N est plus élevé ; cependant, on a besoin que N soit élevé pour que l'invention fonctionne bien.

Pour obtenir une valeur moyenne approchée, on calcule la valeur médiane entre deux valeurs extrêmes de luminance reçues par un pixel au cours des N images successives.

On considère donc que le niveau moyen de signal qu'un pixel fournit, et qui représente un niveau de luminance moyenne, est la demi-somme entre le signal le plus faible reçu par un pixel et le signal le plus fort reçu par ce pixel. Et, selon l'invention, on considère que tous les pixels devraient recevoir au moins une fois un niveau de luminance très faible qui est le même pour tous les pixels et un niveau de luminance très fort qui est le même pour tous les pixels ; et on considère d'autre part que la demi-somme de ces luminances représente un niveau de luminance moyen qui devrait être le même pour tous les pixels.

La correction proposée, approximative mais intéressante, consiste alors à considérer que la demi-somme du niveau de signal le plus faible $S_{ij}min$ et du niveau de signal le plus fort $S_{ij}max$ fourni par un pixel devrait être une valeur de référence M0 identique pour tous les pixels. Si ce n'est pas le cas on fait une correction additive pour soustraire du signal reçu la différence entre la demi-somme constatée et la valeur de référence M0.

Le signal corrigé est alors

$$S^*_{ij,n} = S_{ij,n} + M0 - (S_{ij}min + S_{ij}max)/2$$

Les valeurs minimale et maximale sont obtenues par un calcul récursif pour que ce calcul puisse être effectué dans un petit circuit associé à chaque pixel.

L'évaluation des valeurs minimale et maximale du signal reçu par un pixel, peut se faire simplement en comparant la valeur du signal reçu à celle d'un registre de valeur minimale et d'un registre de valeur maximale. Le contenu du registre de valeur minimale est remplacé par la valeur du signal si celle-ci est plus faible que le contenu du registre ; sinon le registre reste inchangé. Le contenu du registre de valeur maximale est remplacé par la valeur du signal si celle-ci est plus forte que le contenu du registre ; sinon le registre reste inchangé.

Cependant, comme on l'indique ci-dessous, il peut être préférable de faire un calcul récursif plus sophistiqué qui minimise l'impact de points aberrants sur la valeur minimale ou maximale détectée. D'autre part il peut être souhaitable de prévoir que les valeurs extrêmes stockées, pour chaque pixel, tendent naturellement à être progressivement ramenées l'une vers l'autre, pour tenir compte de ces points aberrants et pour tenir compte de dérives progressives, de variations de température, etc.

Le calcul qui suit montre comment on peut calculer récursivement et stocker des valeurs extrêmes corrigées, à la place des valeurs extrêmes véritables, pour tenir compte de cela.

Calcul récursif de valeurs extrêmes corrigées

Le calcul sera montré à propos de la valeur maximale du signal reçu par le pixel. Un calcul identique pourrait être fait pour la valeur minimale.

On appelle $S_{ij}maxc$ la valeur extrême corrigée, stockée dans un registre et utilisée pour la correction du signal courant en lieu et place de la véritable valeur extrême $S_{ij}max$ qui a pu être détectée. De même, $S_{ij}minc$ est la valeur extrême minimale corrigée, stockée dans un autre registre. Lors de la $(n-1)^{ième}$ image, les valeurs stockées sont $S_{ij}maxc_{n-1}$ et $S_{ij}minc_{n-1}$.

Si le signal courant $S_{ij,n}$ d'une image est supérieur à la valeur stockée, on modifie la valeur stockée pour lui ajouter une fraction 1/B de la différence entre la valeur courante et la valeur stockée, et non pas la totalité de cette différence comme on le ferait si on voulait stocker la véritable valeur extrême. La valeur de B, de préférence une puissance de deux $2^{pb}$ pour simplifier les circuits de calcul numérique, doit être assez grande pour éliminer l'impact de points aberrants, pas trop grande pour ne pas engendrer une constante de temps d'établissement trop grande au départ. B peut être choisi typiquement entre 1 et $2^8$.

La nouvelle valeur haute corrigée est dans ce premier cas :

$$S_{ij}maxc_n = S_{ij}maxc_{n-1} + (S_{ij,n} - S_{ij}maxc_{n-1})/B$$

Si au contraire le signal courant est inférieur à la valeur stockée, on retranche une faible valeur au contenu du registre, de préférence une valeur $(S_{ij,}maxc - S_{ij}minc)/A$ pour que le contenu du registre se réduise progressivement si le dépassement de sa valeur ne se produit que rarement. La valeur A, de préférence une puissance de deux $2^{pa}$, doit être beaucoup plus grande que la valeur de B : typiquement entre $2^8$ et $2^{14}$.

La nouvelle valeur haute corrigée est dans ce deuxième cas :

$$S_{ij}maxc_n = S_{ij}maxc_{n-1} - (S_{ij}maxc_{n-1} - S_{ij}minc_{n-1})/A$$

Ainsi, l'impact d'un point aberrant ne sera que limité, et ce n'est que si des valeurs fortes se reproduisent assez souvent qu'elles finiront par définir une valeur maximale à stocker. Sinon, la valeur extrême stockée se réduit lentement (constante de temps de quelques minutes si A est égal à $2^{12}$ à $2^{14}$ pour 50 images par seconde).

Le contenu du registre ne représente donc pas véritablement une valeur extrême détectée, mais une sorte de valeur haute récurrente assez souvent atteinte par le pixel et qui, pour les besoins de la correction et de l'élimination du bruit fixe d'image, se révèle tout à fait utilisable.

De même un registre de valeur basse contiendrait une sorte de valeur basse récurrente assez souvent atteinte par le pixel. L'algorithme est symétrique du précédent : en cas de dépassement vers le bas du registre on ajoute à la valeur stockée une fraction 1/B de la différence entre le signal et le contenu du registre ; en cas d'absence de dépassement, on ajoute à la valeur stockée la même faible différence $(S_{ij}maxc_{n-1} - S_{ij}minc_{n-1})/A$.

Comme ces valeurs haute et basse $S_{ij}maxc$ et $S_{ij}minc$ sont obtenues par le même calcul pour tous les pixels, on comprend qu'elles peuvent statistiquement servir de base pour la correction des dispersions des pixels en lieu et place des valeurs extrêmes véritables.

La correction d'un pixel consiste alors à appliquer la formule suivante :

$$S^*_{ij,n} = S_{ij,n} + M0 - (S_{ij}minc + S_{ij}maxc)/2$$

Mise en oeuvre de la correction par la valeur médiane entre extrêmes

La description d'un circuit de mise en oeuvre est faite ci-après pour le cas plus complexe où on utilise les valeurs extrêmes corrigées haute et basse comme indiqué dans le chapitre précédent "Calcul récursif de valeurs extrêmes corrigées".

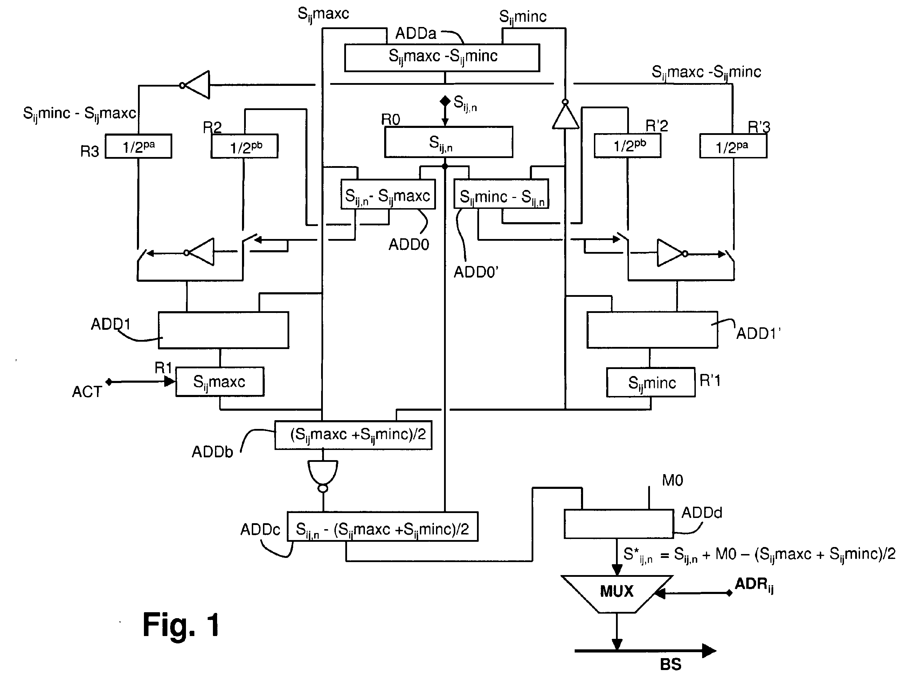

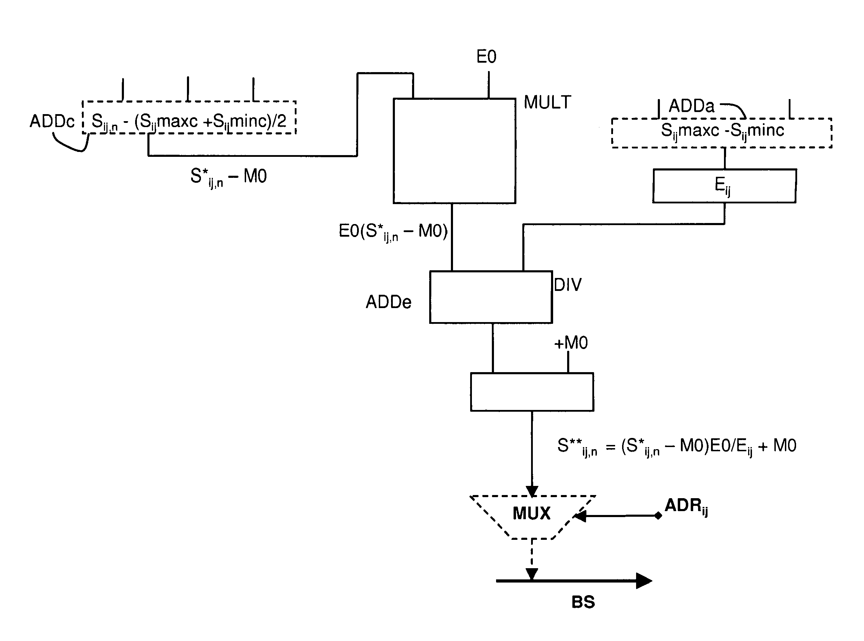

La figure 1 représente un circuit élémentaire, associé à un seul pixel $P_{ij}$ de la matrice de prise d'image, capable de corriger le signal issu de ce pixel à partir de la moyenne approchée des signaux issus de ce pixel sur un grand nombre d'images. Le circuit effectue le calcul numérique récursif indiqué ci-dessus. Il y a autant de circuits que de pixels.

Le signal numérisé $S_{ij,n}$ issu du pixel $P_{ij}$ et correspondant à la n$^{ième}$ image est contenu dans un registre d'entrée R0. Le signal corrigé $S^*_{ij,n}$ sort par un bus de sortie BS.

La partie gauche de la figure représente le circuit de détermination de la valeur haute corrigée ; la partie droite représente l'élaboration de la valeur basse corrigée ; la partie inférieure représente le calcul de la moyenne (demi-somme des extrêmes corrigés) et la correction apportée au signal.

Un registre R1 contient la valeur haute corrigée courante $S_{ij}maxc$. Un additionneur ADD0 recevant les sorties des registres R0 et R1 calcule la différence entre le signal issu du pixel $S_{ij,n}$ et la valeur haute $S_{ij}maxc$. Cette différence peut être divisée par $2^{pb}$, grâce à un registre R2 dont la fonction est simplement de décaler de pb bits vers la droite la valeur qu'il reçoit, ce qui équivaut à une division par $2^{pb}$. Le registre R2 contient donc la valeur $(S_{ij,n} - S_{ij}maxc_{n-1})/2^{pb}$ qui est une valeur d'incrémentation qu'on souhaite appliquer à la valeur haute stockée si le signal dépasse la valeur haute stockée.

Le bit de poids fort de la sortie de l'additionneur ADD0 indique si le signal $S_{ij,n}$ est plus grand que la valeur haute stockée $S_{ij}maxc$, et dans ce cas la sortie du registre R2 sera utilisée et appliquée à un additionneur ADD1. Sinon, c'est la sortie d'un registre R3, contenant la valeur $(S_{ij}minc_{n-1} - S_{ij}maxc_{n-1})/2^{pa}$ qui sera appliquée à l'additionneur ADD1. Ce choix est imposé par un aiguillage commandé par le bit de poids fort de la sortie de l'additionneur, à 0 si la différence $(S_{ij,n} - S_{ij}maxc_{n-1})$ est positive, à 1 si elle est négative.

L'additionneur ADD1 comporte une entrée recevant la sortie de cet aiguillage donc le contenu du registre R2 ou celui du registre R3 ; il comporte une autre entrée qui est reliée à la sortie du registre de valeur haute corrigée R1 contenant $S_{ij}maxc$. La sortie de l'additionneur ADD1 est reliée à l'entrée du registre R1 pour pouvoir mettre un nouveau contenu dans ce dernier.

Le circuit est le même sur la partie droite, pour le calcul de la valeur basse corrigée $S_{ij}minc$. Les mêmes éléments sont désignés par les mêmes références. Il y de petites différences en raison du fait qu'il faut inverser certains signes et c'est pourquoi des inverseurs sont représentés (par exemple, il faut ajouter et non plus retrancher la différence $(S_{ij}maxc_{n-1} - S_{ij}minc_{n-1})/2^{pa}$. Le registre R'1 contient la valeur $S_{ij}minc$ et non $S_{ij}maxc$. Les additionneurs ADD'0 et ADD'1 reçoivent $S_{ij}minc$ et non $S_{ij}maxc$.

Un additionneur ADDa reçoit le contenu du registre R1 et l'opposé du contenu du registre R'1 pour établir la différence $(S_{ij}maxc - S_{ij}minc)$ et l'appliquer aux registres R3 et R'3.

Un additionneur ADDb reçoit les contenus de ces mêmes registres R1 et R'1 pour établir la demi-somme $(S_{ij}maxc + S_{ij}minc)/2$.

Un additionneur ADDc reçoit le signal $S_{ij,n}$ et l'opposé de la demi-somme issue de l'additionneur ADDb, pour établir la différence $S_{ij,n} - (S_{ij}minc + S_{ij}maxc)/2$.

Enfin, un additionneur ADDd reçoit la différence issue de l'additionneur ADDc et la valeur médiane de référence M0 (commune à tous les pixels), pour établir le signal corrigé $S^*_{ij,n}$ tel que :

$$S^*_{ij,n} = S_{ij,n} + M0 - (S_{ij}minc + S_{ij}maxc)/2$$

Les registres de valeurs extrêmes corrigées haute et basse, R1 et R'1 sont réactualisés à chaque nouvelle image pour prendre de nouvelles valeurs. Ils comportent donc une entrée d'actualisation ACT. L'actualisation a lieu par exemple à la fin d'une durée d'exposition d'image pour tous les pixels à la fois. Après actualisation, ces registres contiennent de nouvelles valeurs qui peuvent être utilisées dans les additionneurs ADDb et ADDc pour corriger le signal $S_{ij,n}$.

Le résultat de l'addition, c'est-à-dire le signal corrigé $S^*_{ij,n}$ est fourni par l'additionneur ADDc, à travers un multiplexeur MUX commandé par un bus d'adressage. Le signal corrigé est émis seulement si l'adresse $ADR_{ij}$ du pixel $P_{ij}$ arrive par le bus d'adressage. Le multiplexeur assure la mise en série sur le bus de sortie BS des signaux successifs correspondant à chaque pixel.

Correction multiplicative par l'écart de pentes de luminance

Outre la moyenne de la distribution temporelle, on peut prévoir d'utiliser une deuxième caractéristique statistique de la distribution temporelle des signaux issus d'un pixel. Plus précisément, on peut chercher à faire maintenant une correction multiplicative sur la valeur du signal. Cette correction multiplicative est faite de préférence après correction additive du signal par la valeur moyenne, par application d'un gain $G_{ij}$ au signal corrigé du pixel $P_{ij}$, ou plus exactement à la différence entre le signal corrigé $S^*_{ij}$ et la moyenne désirée M0.

Ainsi, si on a établi un signal corrigé $S^*_{ij,n}$ à partir du signal courant, à partir de la formule $S^*_{ij,n} = S_{ij,n} + M0 - M_{ij}$, on va maintenant établir un signal doublement corrigé $S^{**}_{ij,n}$ tel que

$$(S^{**}_{ij,n} - M0) = G_{ij}.(S^*_{ij,n} - M0)$$

La formule qui précède est donnée à titre général. Si les signaux sont codés en positif et en négatif autour d'une valeur moyenne M0 prise par définition égale à zéro, cette opération est une simple multiplication du signal par le gain $G_{ij}$. Si au contraire la moyenne M0 n'est pas une référence nulle, il faut utiliser la formule complète et cette correction multiplicative du signal $S^*_{ij}$ comprend bien sûr aussi un terme additif qui est égal à $M0[1-G_{ij}]$.

Le gain $G_{ij}$ à appliquer est calculé à partir de l'observation d'une pente moyenne de variation du signal en fonction de la luminance. Si les pixels ont des pentes de variation différentes, alors il y aura un motif de bruit fixe lié aux particularités des pixels individuels. Il est donc souhaitable de déterminer la pente moyenne, de déterminer son écart par rapport à une pente de référence, et de corriger le signal par application d'un gain correspondant au rapport entre la pente désirée et la pente réelle observée.

La pente observée peut être déterminée en observant l'écart entre extrêmes $S_{ij}max - S_{ij}min$, ou encore l'écart entre extrêmes corrigés $S_{ij}maxc - S_{ij}minc$, les valeurs $S_{ij}maxc$ et $S_{ij}minc$ étant calculées comme indiqué précédemment dans le paragraphe "Calcul récursif de valeurs extrêmes corrigées". En effet, cet écart est représentatif aussi d'une pente de variation en fonction de la luminance : si l'écart varie entre deux pixels, alors que tous les pixels devraient statistiquement voir les mêmes luminances extrêmes au bout d'un certain nombre d'images, c'est que leurs pentes de variation en fonction de la luminance ne sont pas les mêmes.

Si l'écart observé est $E_{ij}$ et l'écart théorique de consigne est E0 (le même pour tous les pixels), le gain à appliquer est $G_{ij} = E0/E_{ij}$.

Le signal doublement corrigé, additivement et multiplicativement, est alors :

$$S^{**}_{ij,n} = (E0/E_{ij}).S^*_{ij,n} + [1-(E0/E_{ij})].M0$$

donc

$$S^{**}_{ij,n} = (E0/E_{ij})[ S_{ij,n} + M0 - M_{ij}] + [1-(E0/E_{ij})].M0$$

Ou encore :

$$S^{**}_{ij,n} = (E0/E_{ij}).\ S_{ij,n} - (E0/E_{ij}).M_{ij} + M0$$

On comprend qu'on pourrait bien sûr intervertir les opérations de correction multiplicative et de correction additive, en multipliant directement le signal $S_{ij,n}$ issu du pixel par le gain $E0/E_{ij}$, la correction additive unique étant alors égale à $M0- (E0/E_{ij}).M_{ij}$

Le circuit associé au pixel comprend alors les éléments nécessaires pour effectuer non seulement des additions et soustractions mais aussi des multiplications et divisions.

On notera qu'il peut être souhaitable de donner une valeur plancher à l'écart entre valeurs extrêmes (corrigées ou non corrigées), c'est-à-dire qu'il peut être souhaitable d'empêcher que l'écart utilisé dans la formule ci-dessus descende au-dessous d'une certaine valeur. En d'autres mots, si l'écart constaté (corrigé ou non corrigé) est trop faible, on le remplace par la valeur plancher pour faire le calcul de gain. Cela évite d'appliquer un trop grand gain pour des pixels qui ont une trop faible pente de variation de signal en fonction de la luminance.

Pour mettre en oeuvre ce calcul, on peut par exemple compléter le schéma de la figure 1 par celui de la figure 2 : en reprenant la sortie de l'additionneur ADDc, on effectue dans un circuit de multiplication MULT la multiplication par E0 d'une valeur qui s'avère être égale à $S^*_{ij,n}$ - M0.

On divise cette valeur, dans un diviseur DIV par le contenu d'un registre qui contient l'écart entre extrêmes corrigés $S_{ij}maxc - S_{ij}minc$, cette valeur représentant un écart $E_{ij}$ dans le calcul de correction de pente.

Le résultat de la division est une valeur $(S^*_{ij,n}$ - M0)$E0/E_{ij}$. En ajoutant M0 à cette valeur dans un additionneur ADDe, on produit le signal $S^{**}_{ij}$ à la fois additivement et multiplicativement.

<u>Mise en oeuvre de la correction au niveau du pixel</u>

Le schéma de la figure 1 suppose que le signal $S_{ij}$ à corriger arrive dans un registre d'entrée R0 sous forme numérique, en vue d'une correction numérique. Ce signal numérique peut provenir d'une conversion analogique-numérique, dans le pixel ou dans le circuit de correction associé au pixel, d'un courant ou d'une tension analogique issues du photodétecteur.

Des architectures de circuits hybrides peuvent permettre de le faire par exemple avec un pixel photosensible sur une puce en regard d'un circuit électronique de traitement sur une autre puce. Les puces sont rapportées l'une contre l'autre et des connexions électriques directes sont établies entre un pixel et son circuit de calcul associé. On pourrait envisager aussi que la conversion analogique-numérique aussi bien que le calcul de correction soient effectués dans le pixel lui-même, si la technologie le permet, à la condition de disposer de suffisamment de place pour loger les circuits électroniques de calcul de correction dans l'espace disponible attribué à chaque pixel.

Le signal numérique issu du pixel peut aussi être obtenu directement par comptage numérique direct : on sait par exemple faire un élément de photodétection qui fournit un courant de charges, lequel est converti en impulsions dont la fréquence est proportionnelle à l'éclairement. Un compteur, dans le pixel, compte les impulsions pendant la durée d'exposition, de sorte que le contenu du compteur représente, directement sous forme numérique, la dose d'éclairement reçue pendant la durée d'exposition. C'est ce contenu qui constitue alors le signal $S_{ij}$ issu du pixel, à corriger par le circuit de correction associé. Le registre R0 des figures 1 et 2 est alors tout simplement ce compteur.

**Revendications**

1. Procédé de traitement de signaux issus des pixels d'un capteur d'image matriciel, ce procédé comprenant les étapes suivantes :

   - on recueille le signal ($S_{ij,n}$) issu de chaque pixel au cours d'un grand nombre d'images successives ;
   - on détermine pour chaque pixel une valeur approchée d'une moyenne du signal issu du pixel au cours de ce grand nombre d'images ;
   - on corrige instantanément le signal issu de chaque pixel en fonction de la valeur moyenne approchée déterminée et d'une valeur moyenne de référence (M0) commune à tous les pixels,
   - on transmet hors du circuit associé au pixel un signal corrigé,
   la moyenne approchée étant obtenue en déterminant des valeurs limites haute et basse prises par le signal issu du pixel au cours du grand nombre d'images, et en calculant une valeur centrale entre ces valeurs limites hautes et basses.

2. Procédé de traitement selon la revendication 1, **caractérisé en ce que** le calcul de la moyenne approchée et la correction du signal sont effectués, pour chaque pixel, dans un circuit électronique élémentaire associé au pixel, et on extrait d'une matrice de circuits associés les signaux corrigés correspondant à chaque pixel.

**3.** Procédé de traitement selon l'une des revendications 1 et 2, **caractérisé en ce que** les valeurs limites haute et basse sont calculées numériquement par une méthode récursive.

**4.** Procédé de traitement selon la revendication 3, **caractérisé en ce que** la valeur limite haute utilisée dans le calcul de moyenne est obtenue en comparant la valeur de signal non corrigé issu de chaque pixel avec le contenu d'un registre de valeur limite haute et en remplaçant le contenu du registre par la valeur du signal reçu si cette dernière est plus grande que le contenu du registre, et la valeur limite basse est obtenue en comparant la valeur de signal non corrigé issu de chaque pixel avec le contenu d'un registre de valeur limite basse et en remplaçant le contenu du registre par la valeur du signal reçu si cette dernière est plus petite que le contenu du registre.

**5.** Procédé selon la revendication 3, **caractérisé en ce que** la valeur limite haute ou basse est obtenue par l'algorithme suivant :

- si la valeur du signal issu du pixel pour l'image courante est supérieure à la valeur limite haute ou inférieure à la valeur limite basse, on modifie la valeur limite haute ou basse respectivement pour lui ajouter une fraction de la différence entre la valeur du signal et la valeur limite ;
- si la valeur du signal du pixel est inférieure à la valeur limite haute ou supérieure à la valeur limite basse, on retranche à la valeur limite une fraction de la différence entre les deux valeurs limites.

**6.** Procédé de traitement selon l'une des revendications 1 à 5, **caractérisé en ce que** la moyenne approchée est la demi-somme des valeurs limites haute et basse.

**7.** Procédé de traitement selon l'une des revendications 1 à 6, **caractérisé en ce que** la correction comprend l'ajout au signal issu du pixel de la différence entre la valeur de référence (M0) et la valeur moyenne déterminée $M_{ij}$.

**8.** Procédé de traitement selon l'une des revendications 1 à 7, **caractérisé en ce que** la correction du signal issu du pixel comprend en outre une correction multiplicative utilisant un coefficient multiplicateur qui modifie la pente de variation du signal en fonction de la luminance, le coefficient multiplicateur étant le rapport entre un écart de référence souhaité et l'écart constaté entre les valeurs limites haute et basse.

**9.** Capteur d'image matriciel, comprenant, pour chaque pixel, un circuit numérique élémentaire associé au pixel, ce circuit élémentaire comportant

- des moyens pour calculer une valeur approchée d'une moyenne du signal ($S_{ij,n}$) issu du pixel au cours d'un grand nombre d'images précédentes, la moyenne étant obtenue en déterminant des valeurs limites haute et basse prises par le signal issu du pixel au cours du grand nombre d'images et en calculant une valeur centrale entre ces valeurs limites hautes et basses,
- des moyens pour corriger le signal issu du pixel en fonction de la valeur moyenne approchée déterminée et en fonction d'une valeur moyenne de référence (M0) commune à tous les pixels,
- et des moyens pour transmettre hors du circuit associé au pixel un signal corrigé.

**10.** Capteur d'image matriciel selon la revendication 9, **caractérisé en ce qu'**il comprend un circuit de calcul de la demi-somme des valeurs limite haute et basse comme moyenne approchée.

### Claims

**1.** A method of processing signals obtained from the pixels of a matrix image sensor, this method comprising the following steps:

- the signal ($S_{ij,n}$) obtained from each pixel during a large number of successive images is collected;
- for each pixel, an approximate value of an average of the signal obtained from the pixel during this large number of images is determined;
- the signal obtained from each pixel is instantaneously corrected according to the determined approximate average value and a reference average value (M0) common to all the pixels,

- a corrected signal is transmitted from the circuit associated with the pixel,

the approximate average being obtained by determining high and low limit values taken by the signal obtained from the pixel during the large number of images, and by calculating a median between these high and low limit values.

2. The processing method as claimed in claim 1, **characterized in that** the calculation of the approximate average and the correction of the signal are performed, for each pixel, in an individual electronic circuit associated with the pixel, and the corrected signals corresponding to each pixel are extracted from a matrix of associated circuits.

3. The processing method as claimed in one of claims 1 or 2, **characterized in that** the high and low limit values are calculated digitally by a recursive method.

4. The processing method as claimed in claim 3, **characterized in that** the high limit value used in calculating the average is obtained by comparing the uncorrected signal value obtained from each pixel with the content of a high limit value register and by replacing the content of the register with the value of the received signal if said value is greater than the content of the register, and the low limit value is obtained by comparing the uncorrected signal value obtained from each pixel with the content of a low limit value register and by replacing the content of the register with the value of the received signal if said value is smaller than the content of the register.

5. The method as claimed in claim 3, **characterized in that** the high or low limit value is obtained by the following algorithm:

- if the value of the signal obtained from the pixel for the current image is greater than the high limit value or less than the low limit value, the high or low limit value are modified respectively to add to them a fraction of the difference between the value of the signal and the limit value;
- if the value of the signal from the pixel is less than the high limit value or greater than the low limit value, a fraction of the difference between the two limit values is subtracted from the limit value.

6. The processing method as claimed in one of claims 1 to 5, **characterized in that** the approximate average is the half-sum of the high and low limit values.

7. The processing method as claimed in one of claims 1 to 6, **characterized in that** the correction comprises the addition to the signal obtained from the pixel of the difference between the reference value (M0) and the determined average value $M_{ij}$.

8. The processing method as claimed in one of claims 1 to 7, **characterized in that** the correction of the signal obtained from the pixel further comprises a multiplying correction using a multiplying coefficient which modifies the slope of variation of the signal according to the luminance, the multiplying coefficient being the ratio between a desired reference deviation and the deviation observed between the high and low limit values.

9. A matrix image sensor comprising, for each pixel, an individual digital circuit associated with the pixel, this individual circuit comprising:

- means for calculating an approximate value of an average ($S_{ij,n}$) of the signal obtained from the pixel during a large number of preceding images, the average being obtained by determining high and low limit values taken by the signal obtained from the pixel during the large number of images and by calculating a median between these high and low limit values,
- means for correcting the signal obtained from the pixel according to the determined approximate average value and according to a reference average value (M0) common to all the pixels,
- and means for transmitting a corrected signal from the circuit associated with the pixel.

10. The matrix image sensor as claimed in claim 9, **characterized in that** it comprises a circuit for calculating the half-sum of the high and low limit values as an average value.

**Patentansprüche**

1. Verfahren zum Verarbeiten von von Pixeln eines Matrixbildsensors kommenden Signalen, wobei das Verfahren die folgenden Schritte beinhaltet:

- Sammeln der Signale (Sij,n) von jedem Pixel im Laufe einer großen Zahl von aufeinander folgenden Bildern;
- Ermitteln, für jedes Pixel, eines näherungsweisen Mittelwertes der Signale von den Pixeln im Laufe dieser großen Zahl von Bildern;
- augenblickliches Korrigieren der von jedem Pixel kommenden Signale in Abhängigkeit von dem ermittelten näherungsweisen Mittelwert und einem Referenzmittelwert (M0), der allen Pixeln gemeinsam ist,
- Senden eines korrigierten Signals außerhalb der mit dem Pixel assoziierten Schaltung,
wobei der näherungsweise Mittelwert erhalten wird, indem der obere und der untere Grenzwert ermittelt werden, die von den im Laufe der großen Zahl von Bildern von den Pixeln kommenden Signalen genommen wurden, und ein Wert in der Mitte zwischen diesem oberen und unteren Grenzwert berechnet wird.

2.  Verfahren zum Verarbeiten nach Anspruch 1, **dadurch gekennzeichnet, dass** die Berechnung des näherungsweisen Mittelwertes und die Korrektur des Signals für jedes Pixel in einer mit dem Pixel assoziierten elektronischen Grundschaltung durchgeführt werden und die jedem Pixel entsprechenden korrigierten Signale aus einer Matrix von assoziierten Schaltungen extrahiert werden.

3.  Verfahren zum Verarbeiten nach einem der Ansprüche 1 und 2, **dadurch gekennzeichnet, dass** der obere und der untere Grenzwert mit einem Rekursivverfahren digital berechnet werden.

4.  Verfahren zum Verarbeiten nach Anspruch 3, **dadurch gekennzeichnet, dass** der in der Mittelwertberechnung verwendete obere Grenzwert durch Vergleichen der Werte der unkorrigierten Signale von jedem Pixel mit dem Inhalt eines oberen Grenzwertregisters und durch Ersetzen des Inhalts des Registers durch den Wert des empfangenen Signals erhalten wird, wenn Letzterer größer ist als der Inhalt des Registers, und der untere Grenzwert durch Vergleichen des Wertes der unkorrigierten Signale von jedem Pixel mit dem Inhalt eines unteren Grenzwertregisters und durch Ersetzen des Inhalts des Registers durch den Wert des empfangenen Signals erhalten wird, wenn Letzterer kleiner ist als der Inhalt des Registers.

5.  Verfahren zum Verarbeiten nach Anspruch 3, **dadurch gekennzeichnet, dass** der obere oder der untere Grenzwert mittels des folgenden Algorithmus erhalten wird:

- Modifizieren, wenn der Wert des für das laufende Bild von dem Pixel kommenden Signals größer als der obere Grenzwert oder kleiner als der untere Grenzwert ist, des oberen oder unteren Grenzwertes jeweils durch Addieren eines Bruchteils der Differenz zwischen dem Wert des Signals und dem Grenzwert;
- Vermindern, wenn der Wert des Signals des Pixels kleiner als der obere Grenzwert oder größer als der untere Grenzwert ist, des Grenzwertes um einen Bruchteil der Differenz zwischen den beiden Grenzwerten.

6.  Verfahren zum Verarbeiten nach einem der Ansprüche 1 bis 5, **dadurch gekennzeichnet, dass** der näherungsweise Mittelwert die halbe Summe des oberen und des unteren Grenzwertes ist.

7.  Verfahren zum Verarbeiten nach einem der Ansprüche 1 bis 6, **dadurch gekennzeichnet, dass** die Korrektur das Addieren der Differenz zwischen dem Referenzwert (M0) und dem ermittelten Mittelwert $M_{ij}$ zu dem von dem Pixel kommenden Signal beinhaltet.

8.  Verfahren zum Verarbeiten nach einem der Ansprüche 1 bis 7, **dadurch gekennzeichnet, dass** die Korrektur des von dem Pixel kommenden Signals darüber hinaus eine multiplikative Korrektur unter Verwendung eines Multiplikationskoeffizienten beinhaltet, der das Variationsgefälle des Signals in Abhängigkeit von der Luminanz modifiziert, wobei der Multiplikationskoeffizient das Verhältnis zwischen einer gewünschten Referenzabweichung und der festgestellten Abweichung zwischen dem oberen und dem unteren Grenzwert ist.

9.  Matrixbildsensor, der für jedes Pixel eine mit dem Pixel assoziierte digitale Grundschaltung umfasst, wobei diese Grundschaltung Folgendes umfasst:

- Mittel zum Berechnen eines näherungsweisen Mittelwertes des im Laufe einer großen Zahl von vorherigen Bildern von dem Pixel kommenden Signals ($S_{ij,n}$), wobei der Mittelwert durch Ermitteln des von dem im Laufe der großen Zahl von Bildern von dem Pixel kommenden Signal genommenen oberen und unteren Grenzwertes und Berechnen eines Wertes in der Mitte zwischen diesem oberen und unteren Grenzwert erhalten wird,
- Mittel zum Korrigieren der von dem Pixel kommenden Signale in Abhängigkeit von dem ermittelten näherungsweisen Mittelwert und in Abhängigkeit von einem Referenzmittelwert (M0), der allen Pixeln gemeinsam ist,
- und Mittel zum Senden eines korrigierten Signals außerhalb der mit dem Pixel assoziierten Schaltung.

10. Matrixbildsensor nach Anspruch 9, **dadurch gekennzeichnet, dass** er eine Schaltung zum Berechnen der halben Summe des oberen und unteren Grenzwertes als näherungsweisen Mittelwert umfasst.

Fig. 1

E0

ADDc $S_{ij,n}$ - $(S_{ij}maxc + S_{ij}minc)/2$

MULT

ADDa
$S_{ij}maxc$ - $S_{ij}minc$

$S^{*}_{ij,n}$ - M0

$E_{ij}$

E0$(S^{*}_{ij,n}$ - M0)

ADDe

DIV

+M0

$S^{**}_{ij,n} = (S^{*}_{ij,n} - M0)E0/E_{ij} + M0$

MUX

ADR$_{ij}$

BS

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007047834 A